(19) **Europäisches Patentamt / European Patent Office / Office européen des brevets**

(11) **EP 4 561 781 B1**

(12) **EUROPEAN PATENT SPECIFICATION**

(45) Date of publication and mention
of the grant of the patent:
**05.11.2025 Bulletin 2025/45**

(21) Application number: **23841320.7**

(22) Date of filing: **19.12.2023**

(51) International Patent Classification (IPC):
$B23K\ 26/60^{(2014.01)}$     $B23K\ 31/12^{(2006.01)}$

(52) Cooperative Patent Classification (CPC):
**B23K 26/60; B23K 31/12;** Y02P 10/25

(86) International application number:
**PCT/IB2023/062907**

(87) International publication number:
**WO 2024/134472 (27.06.2024 Gazette 2024/26)**

(54) **A METHOD FOR LASER PROCESSING OF A METALLIC MATERIAL, BASED ON THE AUTOMATIC DETERMINATION OF THE MATERIAL OR PROCESSING PARAMETERS**

VERFAHREN ZUR LASERBEARBEITUNG EINES METALLISCHEN MATERIALS AUF DER BASIS DER AUTOMATISCHEN BESTIMMUNG DES MATERIALS ODER DER BEARBEITUNGSPARAMETER

PROCÉDÉ DE TRAITEMENT AU LASER D'UN MATÉRIAU MÉTALLIQUE, BASÉ SUR LA DÉTERMINATION AUTOMATIQUE DU MATÉRIAU OU DE PARAMÈTRES DE TRAITEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.12.2022 IT 202200026064**

(43) Date of publication of application:
**04.06.2025 Bulletin 2025/23**

(73) Proprietor: **Adige S.p.A.**
**38056 Levico Terme (TN) (IT)**

(72) Inventors:
• **VANIN, Mattia**
**38016 Mezzocorona (Trento) (IT)**
• **DEMIR, Ali Gokhan**
**20158 Milano (IT)**

• **COLOMBO, Daniele**
**20838 Renate (Monza Brianza) (IT)**
• **PREVITALI, Barbara**
**20155 Milano (IT)**
• **COLOSIMO, Bianca Maria**
**20161 Milano (IT)**
• **FERRARIO, Lucia**
**21040 Uboldo (Varese) (IT)**
• **GRASSO, Marco Luigi Giuseppe**
**20154 Milano (IT)**

(74) Representative: **Deambrogi, Edgardo et al**
**Jacobacci & Partners S.p.A.**
**Corso Emilia 8**
**10152 Torino (IT)**

(56) References cited:
**EP-A1- 3 822 016     WO-A1-2021/033033**

**Description**

The present invention relates to laser processing of a material, more specifically a metallic material, and in particular improvements in a method and in a machine for laser processing of a material, more specifically for laser cutting, drilling or welding of said material or the additive manufacturing of three-dimensional structures from powders of said material.

More specifically, the invention relates to a method for laser processing of a metallic material as specified in the preamble of claim 1, which is known from document EP3822016.

According to a further aspect, this invention relates to a machine for laser processing of a metallic material, according to the preamble of claim 17.

In the following description and claims, the term "metallic material" is used to identify any manufactured article, such as a sheet or an elongated profile having, without distinction, a closed cross-section-for example with a hollow circular, rectangular or square shape-or an open cross-section-for example a flat section or an L-, C-, U-, H-, I-shaped section, etc.

In the industrial processing of materials, and of metal sheets and profiles in particular, the laser is used as a thermal tool for a large variety of applications that depend on the interaction parameters of the laser beam with the material being processed, specifically on the energy density by volume of incidence of the laser beam on the material and on the interaction time interval.

Laser processing machines are well known and comprise industrial processing machines with a $CO_2$ or ytterbium-doped fiber laser source, or even with a direct diode laser source, which is adapted to emit a single-mode or multi-mode laser beam, with an optical path of the laser beam in air or optical fiber. From the source of emission, the laser beam is conducted along an optical transport path of the beam to a processing head, which comprises an optical system for focusing the laser beam along an optical propagation axis incident on the material.

By directing a laser beam with low energy density (on the order of tens of W per $mm^2$ of surface) for a prolonged time (on the order of seconds) on a metallic material, a hardening process is carried out, whereas by directing a laser beam with high energy density (on the order of tens of MW per $mm^2$ of surface) for a time on the order of femtoseconds or picoseconds on the same metallic material, an ablation process is carried out. In the intermediate range of increasing energy density and decreasing processing time, the control of these parameters allows welding, cutting, perforation, etching, and marking processes to be carried out.

The difference between the various types of processing that may be carried out on a material is therefore substantially attributable to the power of the laser beam used and to the interaction time between the laser beam and the material being processed.

Also in additive manufacturing, control of the laser beam power and the interaction time between the laser beam and the material is crucial to achieving the processing goals, ensuring the desired properties of shape. compactness and stability of the resulting structure.

It is therefore clear that, within the framework of a predetermined type of processing, the quality of the processing depends on the setting of the interaction parameters of the laser beam with the material being processed, which in turn depend on the type of material being processed and the conditions (e.g., the surface and environmental conditions) in which it is at the time of processing.

In fact, different metal alloys respond differently to the processing laser beam, and further differences in the execution of the process are encountered as a result of the surface conditions of the material, such as its state of oxidation or other surface modifications such as the presence of metallic surface coating layers or layers of protective oils, and of the process atmosphere.

Often, however, it is not possible to know precisely the actual composition of a metal alloy, as it may vary over time and as a result of the storage conditions with respect to that which is indicated by the manufacturer. Further, the processing of a material may use different types of assist gases with parameters that depend differently on the state of said material.

Therefore, the desire is felt to improve the quality of industrial processes of laser processing by adapting the machining parameters as efficiently and quickly as possible to the material being processed and to the actual processing conditions.

The object of the present invention is to provide a method for laser processing of a metallic material that is optimized for the material and the processing conditions.

A further object of the present invention is to provide an optimized method of laser processing of a metallic material that may be implemented efficiently and in a production line.

According to the present invention, these objects are achieved by a laser processing method of a metallic material having the features claimed in claim 1.

Particular embodiments form the subject matter of the dependent claims, the content of which is to be understood as an integral part of the present description.

A further subject matter of the invention is a machine for laser processing of a metallic material as claimed.

In summary, the present invention draws its inspiration from the consideration that the type of a material undergoing processing, typically a metal alloy, may be deduced - in qualitative terms - from optical emission phenomena of a metal vapor or a plasma (or combination thereof) emitted from the material to be subjected, or already subjected, to processing and detected through the acquisition of an optical emission spectrum in a spatial region surrounding the material and in proximity thereto. The term "material to be subjected, or already subjected, to processing" refers to the material exposed to the processing laser beam, and thus to a surface layer of the material (of finishing, coating or due to unwanted oxidation) or a sub-surface layer that is exposed in the course of processing. The term "optical emission" refers to a detectable emission over a broad electromagnetic spectrum, also comprising regions in the ultraviolet and infrared, caused by the ionization of the metal vapor or plasma or-in the case of infrared-indicative of thermal emission. The spectra collected are used for the identification of the material to be processed, not for the monitoring or 2-dimensional or 3-dimensional mapping of the process.

In particular, the invention draws its inspiration from the technique of spectroscopic characterization of materials known as LIBS, Laser-Induced Breakdown Spectroscopy, which allows for the identification of the chemical composition of a sample at the atomic level either qualitatively or quantitatively (relative ratio of different elements within the sample) through the analysis of the optical spectrum obtained by creating a plasma from the material using a laser.

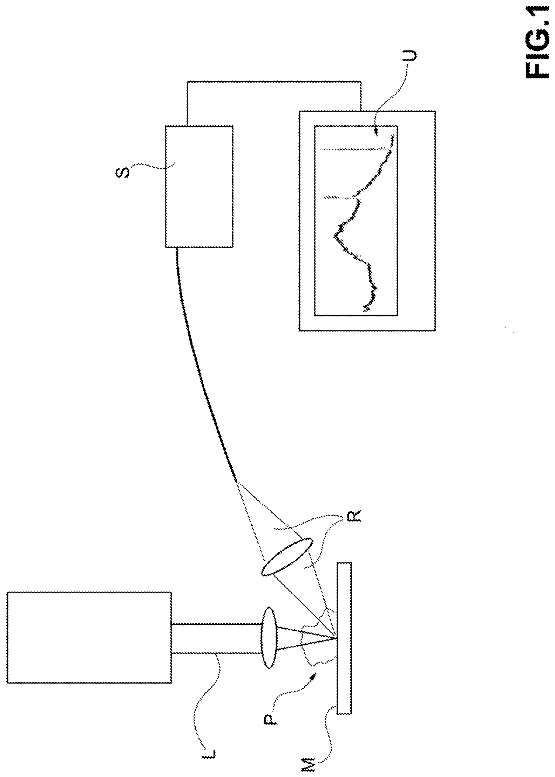

The operation of the technique is schematized in Fig. 1. A short laser pulse L is focused on a sample (material) M, and, through the radiation-matter interaction, a plasma plume P is formed. During the recombination of ions and electrons, there is an emission of radiation R, in the optical band from ultraviolet to near-infrared: a part thereof is a continuous emission, the other part is characteristic of the chemical elements that make up the sample. The radiation is then collected through an optical line and conducted to a spectrometer S where it is divided into the various wavelengths. This results in a spectrum U of emission characteristic of the material, but also influenced by the laser used and the atmosphere in which the process takes place. The collected spectra are then analyzed and processed with appropriate algorithms that also allow the chemical composition of the material to be traced quantitatively.

The lasers used for characterizations of materials through the LIBS technique are typically Q-switched pulsed lasers of high irradiance, $10^{10}$-$10^{15}$ W/cm$^2$, with pulse durations on the order of nanoseconds. Although lasers with pulses on the order of femtoseconds may be used in the laboratory in a vacuum, the most common portable systems are based on Nd:YAG lasers with emission at the wavelength of 1064 nm in air and which only in some cases have the ability to act in an inert atmosphere (such as Argon).

The analysis and processing of the collected spectra is done by comparison with preexisting datasets or standard samples for the fine calibration of the instrument, whereby a quantitative assessment of the chemical composition of the material may be obtained.

In an innovative way, the method of the invention uses the LIBS technique to control the laser processing of a material. Specifically, the control of the laser processing of a material is done by selecting the processing parameters of the material depending on the material class or on the class of processing parameters associated with the characteristic spectral data of the optical emission of the metal vapor or plasma (or a combination thereof) generated by the material, i.e., identified by automatic recognition from such spectral data, wherein the automatic recognition is based on supervised learning of the correspondence between a set of training spectral data samples and related classes of materials or classes of processing parameters.

The method covered by the invention is implementable by a system adaptable to a laser processing machine, which may be easily integrated thereon, even sharing part of the physical hardware (i.e., the laser source and part of the optical path intended to perform the processing) or processing resources already present on the machine and provided for controlling the laser beam and the laser processing as a whole. Advantageously, in fact, the method covered by the invention is implementable by using the laser beam generated by the laser source as a processing tool in innovative ways to generate the emission of metal vapor or plasma from the material, which is necessary for the characterization thereof.

Advantageously, the quality of a laser process is improved as a result of the identification in line (i.e., not in a vacuum, but possibly in a protected atmosphere) of the optimal processing parameters that best approximate (or coincide with) the machining parameters adopted in previous processes applied to a material having the same (or closest) spectroscopic signature, i.e., the same (or closest) type of material to be processed. In-line identification of the processing parameters, either directly or through material identification, is advantageously implemented immediately prior to processing, so as to enable automatic and more precise calibration of the parameters required for processing, remedying any errors in the prior indication of the material and adapting the calibration to the bulk material or to the specific surface treatment.

In a further advantageous way, the technique covered by the invention makes it possible to detect on board a machine a metallic material being processed during laser processing of the material and continuously during the process, without the need for downtime or a prior acquisition, in particular a visual acquisition by an operator, of the data of the material received from the supplier.

Ultimately, the invention makes it possible to improve a process of laser processing of metallic materials as a result of the material recognition directly in the machine, as it makes it possible to identify any errors in the prior indication of the material being processed, avoiding production waste, containing the production costs and optimizing the expected quality of the finished product.

Further features and advantages of the invention will be presented in greater detail in the following detailed description of an embodiment thereof, given by way of non-limiting example, with reference to the accompanying drawings, wherein:

Fig. 1, described above, shows the operational diagram of the LIBS technique;

Fig. 2a-2c schematically show three different configurations of a machine for laser processing of a metallic material operating according to the method covered by the invention, wherein identical or functionally equivalent elements or components are shown with the same references;

Fig. 3 is a flowchart of the operations conducted for the preparation of a laser processing of a metallic material, according to the method covered by the invention;

Fig. 4a-4e are optical plasma emission spectra of exemplary materials;

Fig. 5 is a schematic representation of the preferred classification method adopted in the method covered by the invention;

Fig. 6 is a projection plot of spectral data in a two-dimensional classification space defined by two principal components, representative of four classes of materials;

Fig. 7 shows a breakdown of the classification space in Fig. 5 that maximizes the margin between the classes; and

Fig. 8 shows a new class of spectral data within the breakdown of Fig. 6 in a condition of characterization anomaly.

Fig. 1 has been described above and its contents are intended to be referred to here as common to the construction of a controlled processing machine for implementing a method according to the teachings of the present invention.

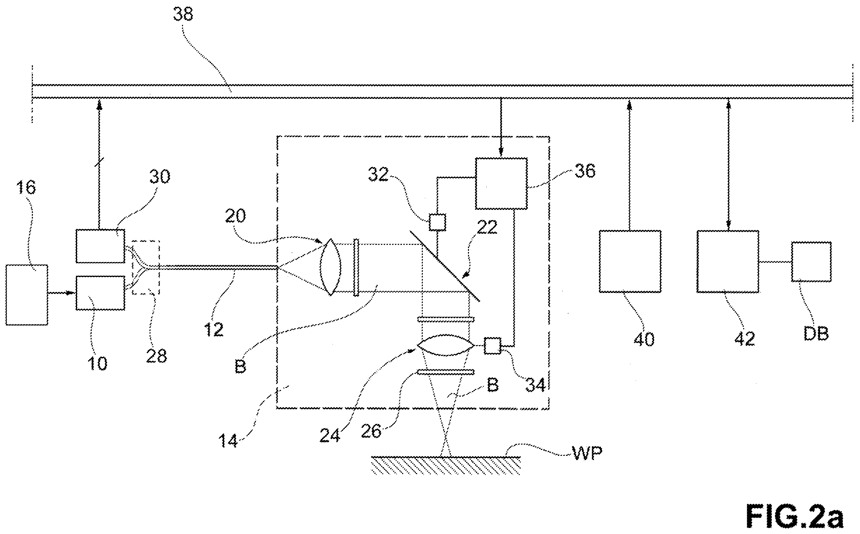

Fig. 2a is a schematic representation of a machine for laser processing of a metallic material according to the invention, in a first configuration.

The machine of Fig. 2a includes at least one laser emission source 10, adapted to emit a laser beam B in a transport means, for example an optical fiber 12, adapted to conduct the processing laser beam emitted from the source towards a processing head 14 located in the proximity of a material WP. The processing laser beam B is, for example, a continuously emitted laser beam with a peak power of 1 kW or more.

A laser emission control unit 16 arranged to control the power and emission duration parameters of the laser beam B and/or to select one among a plurality of laser beams, in the case of multiple sources, may be coupled to the source 10. In one embodiment, the control unit 16 is thus arranged to control the emission of at least one pulse of a characterization laser beam on a predetermined region of the material WP, which is adapted to generate a metal vapor and/or a plasma, and a subsequent optical and thermal emission represent the "signature" of the material. As a result of the power and/or pulse duration of the characterization laser beam, the material undergoes a process of progressive heating, which results in part in its vaporization and subsequently the possible excitation and ionization to form a plasma. In the volume of space surrounding the point of incidence of the characterization laser beam on the material, an atmosphere is formed that may present in combination metal vapor and plasma - also known as "plume" - or only one thereof. The characterization laser beam may be generated from a source (not shown) separate from the source 10 and conducted separately to the processing head, where said characterization laser beam is advantageously guided along an optical path common to the processing laser beam.

In a currently preferred embodiment, a single source 10 is used, and the characterization laser beam is obtained by modulation of the continuously emitted processing laser beam, such as by emitting one or more laser pulses for a duration of between 10 and 200 microseconds through modulation of the processing laser beam. In this way, the additional cost of a second source in the machine is eliminated.

The processing head 14 includes an optical system typically comprising a set of optical elements such as a collimating lens 20, a beam shaping mirror 22, a focusing lens 24 and a protective optical element 26.

An optical combiner device 28 is associated with the source and arranged to combine and launch a plurality of laser beams on the transport fiber, as well as to direct an optical signal - emitted from the metal vapor or plasma of the material and collected by the optical system of the processing head - to spectral data acquisition means 30 such as a spectrometer, adapted to acquire spectral data representative of an optical emission spectrum of the metal vapor or plasma generated by the characterization laser beam. These spectral data are indicative of the material WP subjected to processing. Although not shown in the figure, the path for the optical signal downstream of the combiner device 28 toward the spectrometer 30 may comprise an optical collimating and filtering system.

Associated with the processing head 14 are optical system actuator means identified in the figure by way of example as actuator means 32 of the movement of the beam shaping mirror 22 and actuator means 34 of the beam focus adjustment acting on the focusing lens 24, both of which are controlled by a control unit denoted overall by 36, connected to a fieldbus 38, to which processing and controlling means 40 are also connected, arranged to control the application of the processing laser beam along a predetermined processing trajectory. Controlling the application of the processing laser beam along the predetermined processing path includes controlling the delivery of an assist gas flow (in cutting applications) and controlling the irradiation of a predetermined power distribution of the laser beam towards a predetermined working area by reference to a predetermined working model or program, i.e. according to the working trajectory information and working parameters acquired in the form of movement instructions for the processing head and/or of the material being processed, and physical processing parameters indicative of the power distribution of the optical beam, beam power intensity and activation times of the laser beam as a function of the processing trajectory. The processing means 40 may be integrated in a single processing unit on board the machine or implemented in distributed form, whereby they comprise processing modules located in different parts of the machine, including, for example, the processing head.

The main advantages of this configuration are a non-intrusive installation of spectral data acquisition means, with no modification or dedicated design of the processing head being necessary to accommodate a spectrometer, and an overall more robust system since there is no delicate instrumentation near the processing area. These considerations make the configuration preferable in an industrial context. Emissions at wavelengths shorter than 400 nm may not generally be observed in this configuration because the optical fiber 12 as a transport means does not transmit light in the ultraviolet region. Further, emission peaks will be present at the emission wavelength of the characterization and processing laser beam.

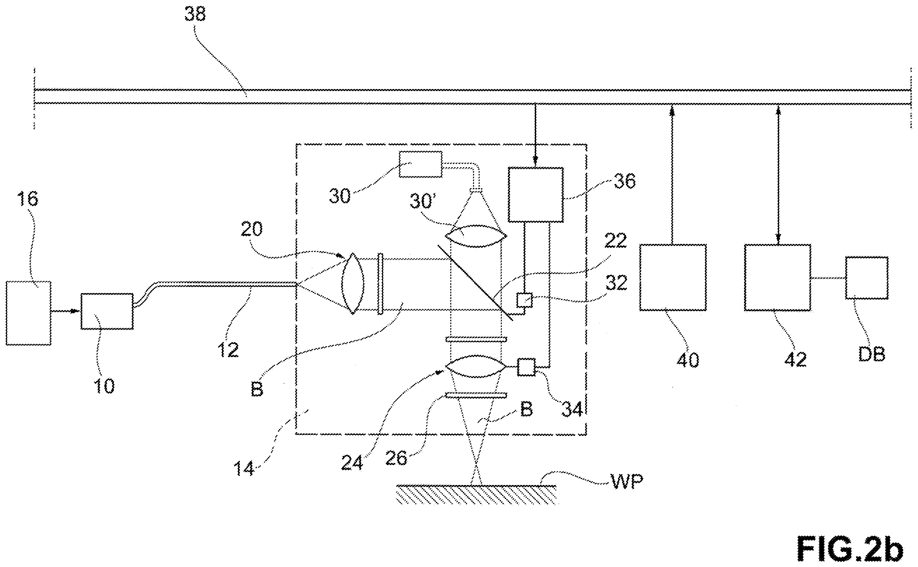

In an alternative embodiment to that described including the optical combiner device 28, which is shown in Fig. 2b in which elements or components identical or functionally equivalent to those illustrated in Fig. 2a are shown with the same references, the spectral data acquisition means 30 are separate from the laser source and integrated into the processing head 14.

In this configuration, the optical signal emitted from the metal vapor or the plasma of the material is collected by the optical system of the processing head, including the protective optical element 26 and the focusing lens 24, and is transmitted through a dichroic beamshaping mirror 22 toward the spectral data acquisition means 30 integrated in the processing head 14. The path for the optical signal downstream of the dichroic mirror 22 to the spectrometer 30 may comprise a collimating and filtering optical system 30'.

In each case, the collection line, which allows the acquisition of the optical signal emitted from the metal vapor or plasma, includes a spectrometer that uses either a very broad band (ultraviolet to near-infrared) or only a part thereof. Alternatively, sensor means aimed at determining the intensity of the signal only at predetermined wavelengths in the near-infrared to the ultraviolet optical band, such as multiple photodiodes, might be used.

Advantageously, in the two configurations described, the collection of the optical signal to the spectral data acquisition means 20 takes place according to a coaxial configuration, in which the optical signal follows at least for a certain distance the same optical propagation path as the characterization and processing laser beam, through the processing head, even more advantageously up to the optical combiner device 18 associated with the source. Using the same optical system to focus the characterization (and processing) laser beam and to acquire the optical emission of the plasma ensures that the emission is collected from the same region of the material wherein the plasma is generated.

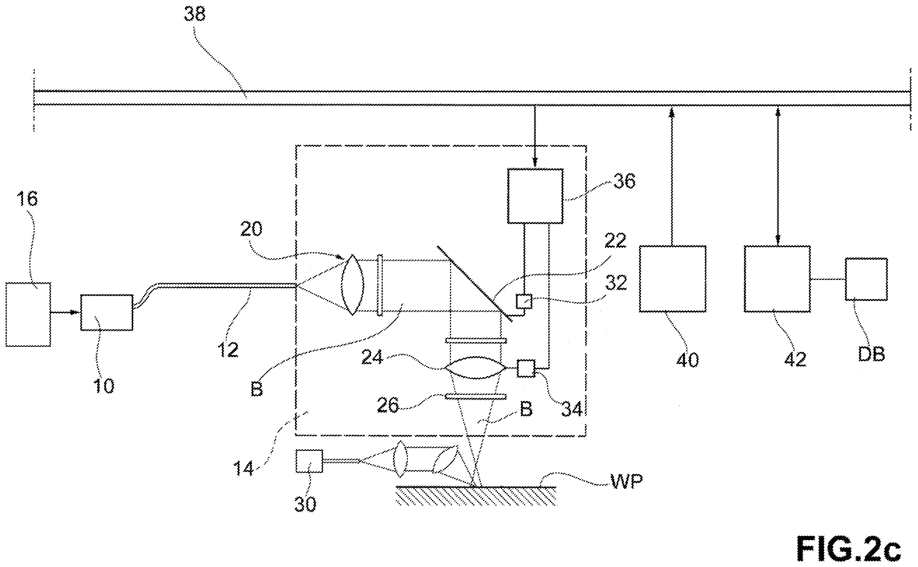

Alternatively, as shown in Fig. 2c wherein elements or components identical or functionally equivalent to those illustrated in Fig. 2a are shown with the same references, the collection of the optical signal may take place off-axis externally to the processing head through the lateral positioning of the spectral data acquisition means 30 at a distance and an angle with respect to the defined propagation direction of the characterization and processing laser beam, depending on the space available in the machine. This configuration allows the collection of spectral data that is neither distorted nor filtered by the optical shaping system of the characterization and processing laser whereby the natural shape of the emissions is maintained, as well as the possibility of acquiring spectral data also in the ultraviolet region. In any case, it is preferable to place a cutoff filter of the reflection wavelengths of the laser beam on the material so as not to saturate the emission spectrum. Disadvantageously, because the optical emission of the metal vapor or plasma from the material is not collected through the optical focusing system of the characterization (and processing) laser beam, any change in the position of the processing head with respect to the material (e.g., a change in the processing distance from the material) requires an adjustment of the distance and positioning angle of the acquisition means of the spectral data with respect to the propagation direction of the characterization and processing laser beam.

In each of the described configurations, electronic processing and automatic recognition means 42, coupled with a data logging memory DB, arranged to process signals emitted from the spectral data acquisition means 30 and to identify one of a plurality of predetermined classes of material or predetermined classes of processing parameters corresponding to said spectral data, are connected to the fieldbus 38. The electronic processing and automatic recognition means 42 are configured in a supervised learning phase using a set of training spectral data samples indicative of predetermined classes of materials or predetermined classes of material processing parameters. The set of training spectral data samples may be obtained based on nameplate data of materials that are the subject of previous processing and updated periodically, or through a preliminary acquisition of spectral data samples, such as several tens of spectra for each of the available materials. The electronic processing and automatic recognition means 42 are configured to select the processing parameters corresponding to the processing parameter class or material class identified by the data logging memory DB, which includes a reference model indicative of a nominal relationship between spectral data and processing parameter classes or material classes.

In general, the term "processing parameters" refers to physical parameters of the processing laser beam and the processing environment, e.g., to at least one among the repetition rate of the processing laser beam pulses, the duration of the processing laser beam pulses, the power of the processing laser beam pulses, the power density distribution of the processing laser beam, the pressure of an assist gas, or - more generally - to processing strategies that include one or more of the physical parameters of the processing laser beam and the processing environment, as well as control parameters of the movement of the processing beam.

The processing and controlling means 40 are arranged for controlling the application of the processing laser beam along the predetermined processing trajectory according to the selected processing parameters.

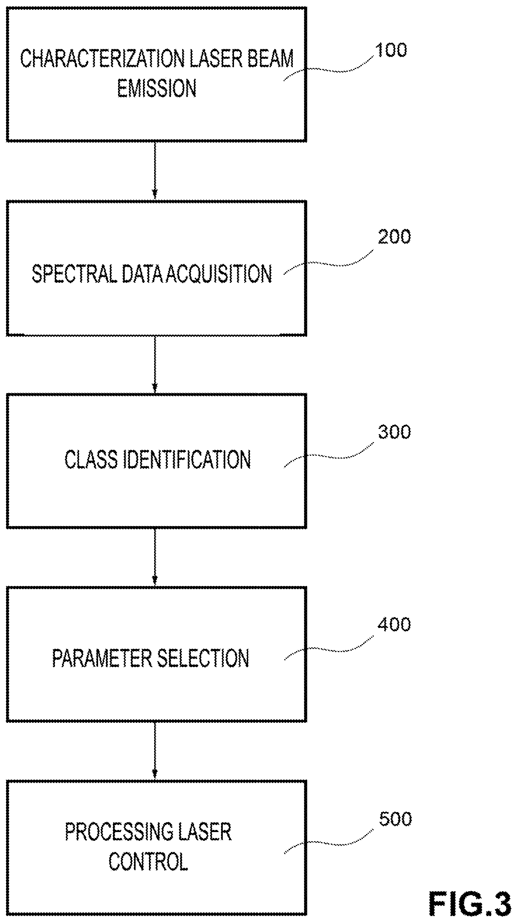

A flowchart of the method covered by the invention is briefly shown in Fig. 3.

At step 100, the control unit 16, triggered by the processing and controlling means 40 or by the electronic processing and automatic recognition means 42, controls the emission of at least one pulse of a characterization laser beam on a predetermined region of the material WP in a characterization atmosphere, so as to generate a metal vapor and/or plasma from the material. In a particular case, the characterization atmosphere is the same as the atmosphere of the working process.

The control unit 16 controls the emission of at least one pulse of the characterization laser beam in an early stage of processing the material, such as on a region of the material intended to be subjected to cutting or drilling, or in a calibration step prior to the processing of the material, on an area of the material not subjected to processing.

The control unit 16 may also control the emission of at least one pulse of the characterization laser beam during the processing of the material, advantageously in the case wherein the characterization laser beam is obtained by modulation of the processing laser beam, possibly by modifying the process atmosphere to provide, temporarily, a different characterization atmosphere.

At step 200, the spectral data acquisition means 30 acquire the spectral data representative of an optical emission spectrum of the metal vapor or plasma, indicative of the material WP being processed.

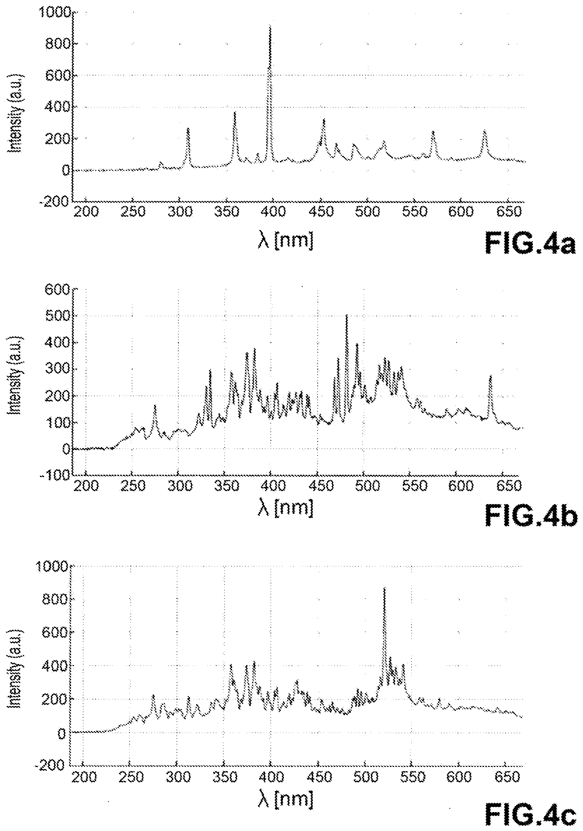

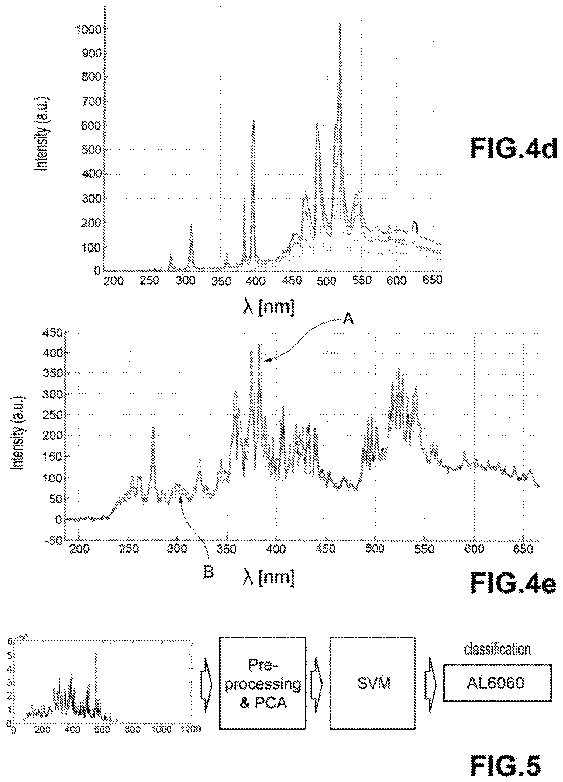

By way of example, the spectra of the aluminum alloy Al 6060 (Fig. 4a), galvanized steel (Fig. 4b) and stainless steel AISI 304 (Fig. 4c) are shown in Fig. 4a-4c. Different intensity values of the optical emission may be detected as a function of the generation conditions of the plasma by the material, such as due to the power of the characterization laser beam or to the process atmosphere and more generally to the laser processing machine used, as shown in Fig. 4d, where spectra of the aluminum alloy Al 6060 in an oxygen atmosphere obtained from characterization laser beams emitted from different laser processing machines with different powers and diameters are shown. Different spectra are also obtained as a function of the surface condition of the material, such as its state of oxidation or its coating, as shown in Fig. 4e where a comparison between the spectra of the carbon steel S235JR under normal conditions (curve A) and the rusted carbon steel S235JR (curve B) is shown.

At step 300 the electronic processing and automatic recognition means 42, configured beforehand in a supervised learning step not shown in the figure, identify one of a plurality of predetermined classes of material or predetermined classes of processing parameters corresponding to the acquired spectral data.

Before applying an automatic recognition algorithm to the spectral data, it is useful to normalize said data in order to have comparable data since even in the presence of the same parameters of the characterization laser beam there may be some degree of variability in the overall intensity of the optical emissions of the plasma. Due to the spectral normalization, it is possible to compensate for any fluctuations in the intensities of the acquired spectral data.

Each spectrum includes a plurality of N emission lines $I(\lambda_i)$ ($i$ = 1, ..., N) acquired in a predetermined wavelength range between ultraviolet and infrared (e.g., between 181 nm and 1100 nm with an average resolution of 0.56 nm).

Two normalization procedures may be employed advantageously. The first is to normalize the spectra by dividing all emission line intensities by the maximum intensity (in other words, representing the maximum peak with the value 1 and scaling the other values accordingly), according to the expression:

$$I_{norm}(\lambda_i) = \frac{I(\lambda_i)}{\max I(\lambda_i)}$$

The second procedure is to divide each intensity of the emission lines by the sum of all the intensities (essentially scaling the respective values relative to the total emission represented by the area subtended by the spectral curve), according to the expression:

$$I_{norm}(\lambda_i) = \frac{I(\lambda_i)}{\sum_{i=1}^{N} I(\lambda_i)}$$

$I_{norm}$ retains the information about the shape of the spectrum that represents the signature of the material and thus useful information that enables the automatic recognition algorithm to perform the classification.

At step 400 the electronic processing and automatic recognition means 42 select the current processing parameters of the material depending on the material class or the recognized processing parameter class.

Finally, in step 500, the processing and controlling means 40 control the irradiation of the processing laser beam in a predetermined area or along a predetermined processing trajectory of the metallic material according to the current processing parameters selected in the previous step.

Expediently, in order to be able to recognize a material over a large surface area, or in a depth volume, wherein material conditions might vary, step 100 is repeated, in succession, or at predetermined processing intervals, whereby the control unit 16 controls the emission of a plurality of pulses of the characterization laser beam on a succession of predetermined regions of a two-dimensional surface scanning area of the material, or on a succession of predetermined regions of a three-dimensional scanning volume of the material, so as to generate a respective metal vapor or plasma from the material present in such scanning regions. For example, The control unit 16 may control the emission of a plurality of pulses of the characterization laser beam over a succession in depth of predetermined regions of a three-dimensional scanning volume of the material, focusing the characterization laser beam on different planes of the material, so as to include a surface layer of the material and at least one subsurface layer, exposed as a result of the characterization of the overlying layer.

More specifically, the electronic processing and automatic recognition means 44 may be advantageously implemented as recognition and classification modules based on principal component analysis (PCA) techniques for the extraction of characteristics and on artificial intelligence classification systems, e.g., neural networks or support vector machines (SVMs). The spectral data may be processed through statistical techniques of various kinds, not only PCA but also through normalization techniques, such as by using spectral data acquired over the entire detection spectrum.

A schematic representation of the aforementioned classification method is shown in Fig. 5.

In the currently preferred embodiment, the identification of the material class or of the class of processing parameters corresponding to the acquired spectral data is done by transforming the acquired spectral data into a classification space defined by predetermined orthogonal latent variables which include a subset of predetermined significant latent variables indicative of the variance of the spectral data, and comparing the value of an n-tuple of said significant latent variables, computed from the detected spectral data, with a set of reference values of said n-tuple of significant latent variables, indicative of a set of training spectral data samples. The parameters corresponding to the predetermined processing parameters associated with the reference values of the n-tuple of latent variables that have a predetermined metric relationship with the value of the n-tuple of significant latent variables calculated from the detected spectral data are selected as the processing parameters of the material.

Advantageously, the predetermined metric relationship is a minimum distance relationship.

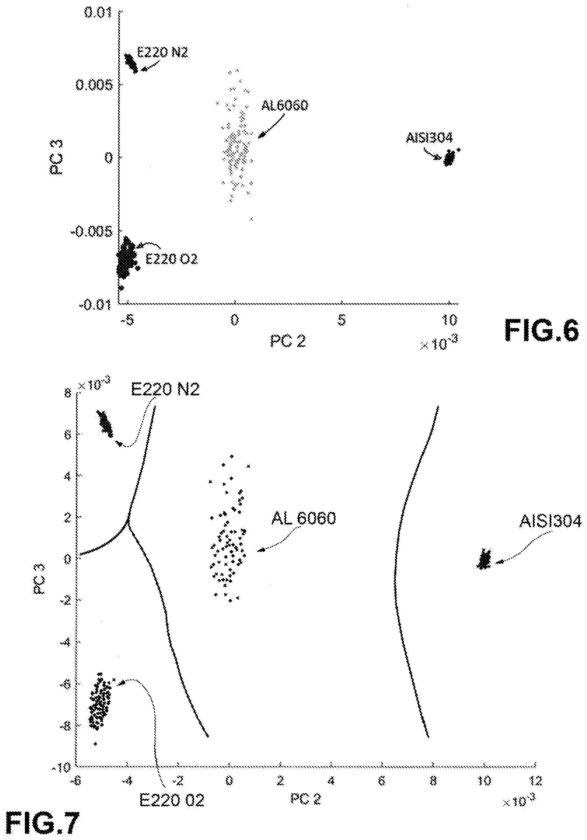

Fig. 6 shows a projection of the spectral data acquired in a two-dimensional classification space defined by the principal components identified as PC2 and PC3, for a specific characterization laser beam and a specific characterization atmosphere, where the training spectral data samples include four classes, respectively the materials Al6060 (aluminum, magnesium, silicon family alloy), AISI304 (stainless steel), E220 (steel) characterized in $O_2$ atmosphere and E220 (steel) characterized in $N_2$ atmosphere. As may be seen graphically, the space of the two principal components PC2 and PC3 clearly distinguishes between the four classes of training spectral data samples.

Fig. 7 shows the spatial partition of the principal components PC2 and PC3 resulting from the application of the SVM classifier. This partition results from using a linear kernel and from the partition function that maximizes the margin between the classes.

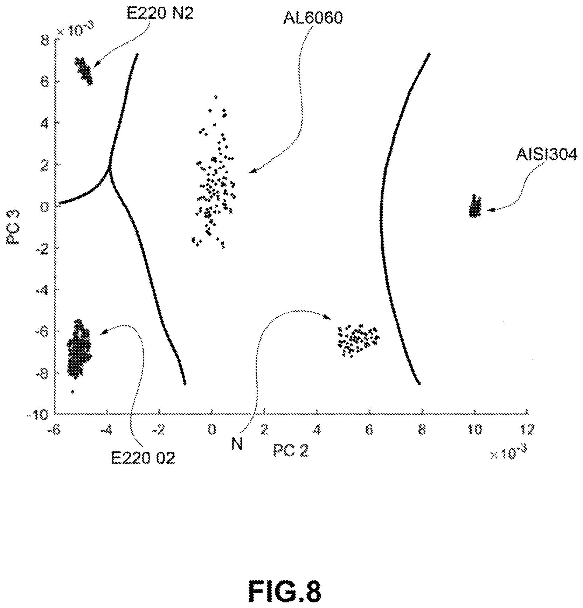

As with any type of classifier, each new measurement is classified into one of the known classes (classes used to train the model), even if it is a new material or a new experimental condition. It is evident in Fig. 7 that there are regions far removed from the clusters observed in training within which any new observation would be forcibly classified into one of the known classes, despite the large discrepancy from the training data. Therefore, a refinement to the method may be introduced by extending the classification to reporting whether a given classification outcome is or is not reliable. This may be done, for example, by automatically determining whether the projection in space of the principal components of the new observation lies within (or near to) the cluster of training data belonging to the allocation class or deviates therefrom by a distance greater than a predetermined threshold, and reporting this characterization anomaly condition to an operator. The example shown in Fig. 8 should be considered in which a new class of observations N is characterized by scores that lie within the region of space wherein the material is classified in the Al6060 family, although the acquired spectral data deviate markedly from the corresponding cluster. The characterization anomaly condition is verified if the distance of each representation of an acquired spectral datum, or the distance of the center of the representations of the spectral data acquired in a plurality of observations, from the center of the training spectral data cluster (or clusters of all known training spectral data classes) is greater than a predetermined threshold. The principle behind the distance calculation from a reference cluster in a multi-dimensional space is based on the same mechanism underlying the SVM method, but in a variant thereof known as one-class SVM or Support Vector Data Description (SVDD), as described by Tax, D. M., Duin, R. P., in "Support vector data description. Machine learning", 54(1), pp. 45-66, 2004, by Ning, X., Tsung, F., "Improved design of kernel distance-based charts using support vector methods", IIE transactions, 45(4), pp. 464-476, 2013 and from Grasso M., Colosimo B.M., Semeraro Q., Pacella M., "A Comparison Study of Distribution-Free Multivariate SPC Methods for Multimode Data", Quality & Reliability Engineering International, 31(1), pp. 75-96, 2015.

The characterization anomaly condition may be followed up by investigating with an operator whether it is a new material or a new combination of material and process atmosphere. If so, such data may be added to the reference model as new training spectral data samples, and the classifier may be retrained once a sufficient number of observations attributable to that class are available. If not, it might still be useful to include the new observation in the set of training samples for that material to account for extra variability that was not observed in the first training phase. This would enable improved classification performance in the future. Also in this case, if the training spectral data sample set is expanded, it is necessary to retrain the classification algorithm and also redefine the value of the distance threshold that defines a characterization anomaly reporting condition.

Naturally, without prejudice to the principle of the invention, the embodiments and the details of execution may vary widely with respect to that which has been described and illustrated purely by way of non-limiting example, without thereby departing from the scope of protection of the invention defined by the appended claims.

**Claims**

1. A method for laser processing of a metallic material, in particular for laser cutting, drilling or welding of a volume of said material or the additive manufacture of three-dimensional structures from powders of said material, comprising irradiating a processing laser beam in a predetermined area or along a predetermined trajectory for processing the metallic material, in a predetermined process atmosphere and according to current processing parameters selected on the basis of said material, comprising a step of :

    - controlling the emission of at least one pulse of a characterization laser beam on a predetermined region of the material in said predetermined process atmosphere so as to generate a metal vapor and/or plasma from the material; and **characterized by** the steps of:

    - acquiring spectral data representative of an optical emission spectrum of the metal vapor or plasma indicative of the material being processed in said predetermined process atmosphere;

    - identifying one of a plurality of predetermined classes of material or predetermined classes of processing parameters corresponding to said spectral data by means of electronic processing and automatic recognition means configured in a supervised learning phase using a set of training spectral data samples indicative of predetermined material classes or predetermined classes of material processing parameters ; and
    - selecting the current processing parameters of the material depending on the material class or class of processing parameters identified.

2. The method according to claim 1, wherein said predetermined processing parameters comprise at least one of repetition frequency of the pulses of the processing laser beam, duration of the pulses of the processing laser beam, power of the pulses of the processing laser beam, distribution of the power density of the processing laser beam, assist gas pressure.

3. The method according to any one of the preceding claims, comprising controlling the emission of at least one pulse of the characterization laser beam at an early stage of the processing of the material, on a region of the material intended to be cut or drilled.

4. The method according to any one of claims 1 or 2, comprising controlling the emission of at least one pulse of the characterization laser beam in a calibration step prior to processing the material, on an area of the material not subject to processing.

5. The method according to claim 3 or 4, comprising controlling the emission of a plurality of pulses of the characterization laser beam on a succession of predetermined regions of a two-dimensional scanning area of the material or on a succession of predetermined regions of a three-dimensional scanning volume of the material in such a way as to generate a respective metal vapor or plasma from the material present in said scanning regions.

6. The method according to claim 5, wherein controlling the emission of a plurality of pulses of the characterization laser beam on a succession of predetermined regions of a three-dimensional scanning volume of the material comprises focusing said laser beam on different planes of the material, including a surface layer of the material and at least one subsurface layer, a first pulse generating a metal vapor or plasma from the material of the surface layer and at least a second pulse generating a metal vapor or plasma from the material of the subsurface layer.

7. The method according to any of the preceding claims, wherein spectral data representative of the optical emission spectrum of the metal vapor or plasma of the material are acquired in an optical band between near-infrared and ultraviolet.

8. The method according to claim 7, wherein spectral data representative of the optical emission spectrum of the metal vapor or plasma of the material are acquired at predetermined wavelengths in the optical band between near infrared and ultraviolet.

9. The method according to any one of the preceding claims, wherein said characterization laser beam is obtained by modulation of the processing laser beam.

10. The method according to claim 9, wherein said at least one pulse of the characterization laser beam is emitted for a duration between 10 and 200 microseconds by modulation of a continuously emitted processing laser beam with a peak power of 1kW or more.

11. The method according to any one of claims 1 to 8, wherein said characterization laser beam is guided along an optical path common to the processing laser beam in a processing head of a machine for implementing the laser processing process.

12. The method according to claim 9 or 10, comprising detecting the optical emission spectrum of metal vapor or plasma coaxial to the propagation direction of the processing laser beam in a processing head of a machine for implementing the laser processing process.

13. The method according to claim 9 or 10, comprising detecting the optical emission spectrum of metal vapor or plasma at a predetermined angle to the propagation direction of the processing laser beam in a processing head of a machine for implementing the laser processing process, outside the processing head.

14. The method according to any one of the preceding claims, comprising controlling the emission of at least one pulse of the characterization laser beam during the processing of the material.

15. The method according to any one of the preceding claims, wherein identifying one of a plurality of predetermined classes of material or classes of processing parameters corresponding to said spectral data by electronic processing and automatic recognition means includes:

- transforming said spectral data into a classification space defined by predetermined orthogonal latent variables, said latent variables including a subset of predetermined significant latent variables indicative of the variance of said spectral data; and
- comparing the value of an n-tuple of said significant latent variables calculated from said spectral data with a set of reference values of said n-tuple of significant latent variables indicative of said set of training spectral data samples,

whereby the material processing parameters are selected corresponding to the predetermined processing parameters associated with the reference values of said n-tuple of latent variables that have a predetermined metric relationship with the value of said n-tuple of significant latent variables calculated from the collected spectral data.

16. The method according to claim 15, wherein said predetermined metric relationship is a minimum distance relationship.

17. A machine for laser processing of a metallic material, in particular for laser cutting, drilling or welding of a volume of said material or for additive manufacturing of three-dimensional structures from powders of said material, comprising

- a source (10) for emitting a processing laser beam (B);
- means for conducting the processing laser beam (B) emitted from said source (10) along an optical path for transporting the beam (B) to a processing head (14) located in the vicinity of said material (WP); and
- processing and controlling means (40) arranged for controlling the application of said processing laser beam (B) along a predetermined processing trajectory on the material (WP), in a predetermined process atmosphere and according to current processing parameters selected on the basis of said material,

**characterized in that** it further comprises:

- a source (10) of emission of at least one pulse of a characterization laser beam on a predetermined region of the material in said predetermined process atmosphere, so as to generate a metal vapor and/or plasma from the material;
- means (30) for acquiring spectral data representative of a metal vapor or plasma optical emission spectrum indicative of the material being processed in said predetermined process atmosphere; and
- electronic processing and automatic recognition means (42) configured in a supervised learning phase by a set of training spectral data samples indicative of predetermined classes of materials or predetermined classes of material processing parameters and arranged to identify one of a plurality of predetermined classes of materials or predetermined classes of processing parameters corresponding to said acquired spectral data,

whereby said processing and controlling means (40) are arranged for controlling the application of said processing laser beam (B) according to selected current processing parameters depending on the material class or on the class of processing parameters identified.

## Patentansprüche

1. Verfahren zur Laserbearbeitung eines metallischen Materials, insbesondere zum Laserschneiden, -bohren oder -schweißen eines Volumens des Materials oder zur additiven Fertigung dreidimensionaler Strukturen aus Pulvern des Materials, umfassend Abstrahlen eines Bearbeitungslaserstrahls in einem vorbestimmten Bereich oder entlang einer vorbestimmten Trajektorie zur Bearbeitung des metallischen Materials, in einer vorbestimmten Prozessatmosphäre und nach aktuellen Bearbeitungsparametern, die auf der Basis des Materials ausgewählt werden, umfassend einen Schritt:

   Steuern der Emission von mindestens einem Impuls eines Charakterisierungslaserstrahls auf einen vorbestimmten Bereich des Materials in der vorbestimmten Prozessatmosphäre, um Metalldampf und/oder Plasma aus dem Material zu erzeugen;
   und **gekennzeichnet durch** die folgenden Schritte:

   Erfassen spektraler Daten, die ein optisches Emissionsspektrum des Metalldampfs oder Plasmas darstellen, das das zu bearbeitende Material in der vorbestimmten Prozessatmosphäre anzeigt;
   Identifizieren einer aus einer Vielzahl vorbestimmter Materialklassen oder vorbestimmter Klassen von Bearbeitungsparametern, die den spektralen Daten entsprechen, mittels elektronischer Verarbeitungs- und automatischer Erkennungsmittel, die in einer überwachten Lernphase konfiguriert sind, die einen Satz von Trainingsspektraldatenmuster verwenden, die vorbestimmte Materialklassen oder vorbestimmte Klassen von Materialbearbeitungsparametern anzeigen, und
   Auswählen der aktuellen Bearbeitungsparameter des Materials in Abhängigkeit von der identifizierten Materialklasse oder der identifizierten Klasse von Bearbeitungsparametern.

2. Verfahren nach Anspruch 1, wobei die vorbestimmten Bearbeitungsparameter mindestens eine der folgenden Eigenschaften umfassen: Wiederholungsfrequenz der Impulse des Bearbeitungslaserstrahls, Dauer der Impulse des Bearbeitungslaserstrahls, Leistung der Impulse des Bearbeitungslaserstrahls, Verteilung der Leistungsdichte des Bearbeitungslaserstrahls, Hilfsgasdruck.

3. Verfahren nach einem der vorhergehenden Ansprüche, umfassend Steuern der Emission von mindestens einem Impuls des Charakterisierungslaserstrahls in einer frühen Phase der Bearbeitung des Materials, auf einen Bereich des Materials, der für Schneiden oder Bohren bestimmt ist.

4. Verfahren nach einem der Ansprüche 1 oder 2, umfassend Steuern der Emission von mindestens einem Impuls des Charakterisierungslaserstrahls in einem Kalibrierungsschritt vor dem Bearbeiten des Materials, auf einen Bereich des Materials, der nicht zur Bearbeitung unterzogen wird.

5. Verfahren nach Anspruch 3 oder 4, umfassend Steuern der Emission einer Vielzahl von Impulsen des Charakterisierungslaserstrahls auf eine Abfolge von vorbestimmten Bereichen einer zweidimensionalen Abtastfläche des Materials oder auf eine Abfolge von vorbestimmten Bereichen eines dreidimensionalen Abtastvolumens des Materials, so dass Metalldampf oder Plasma jeweils aus dem Material, das in den Abtastbereichen vorhanden ist, erzeugt wird.

6. Verfahren nach Anspruch 5, wobei Steuern der Emission einer Vielzahl von Impulsen des Charakterisierungslaserstrahls auf eine Abfolge von vorbestimmten Bereichen eines dreidimensionalen Abtastvolumens des Materials Fokussieren des Laserstrahls auf verschiedene Ebenen des Materials umfasst, einschließlich eine Oberflächenschicht des Materials und mindestens eine Unterfläche, wobei ein erster Impuls Metalldampf oder Plasma aus dem Material der Oberflächenschicht und mindestens ein zweiter Impuls Metalldampf oder Plasma aus dem Material der Unterfläche erzeugt.

7. Verfahren nach einem der vorhergehenden Ansprüche, wobei spektrale Daten, die das optische Emissionsspektrum des Metalldampfs oder Plasmas des Materials darstellen, in einem optischen Band zwischen Nah-Infrarot und Ultraviolett erfasst werden.

**8.** Verfahren nach Anspruch 7, wobei spektrale Daten, die das optische Emissionsspektrum des Metalldampfs oder Plasmas des Materials darstellen, bei vorbestimmten Wellenlängen in dem optischen Band zwischen Nah-Infrarot und Ultraviolett erfasst werden.

**9.** Verfahren nach einem der vorhergehenden Ansprüche, wobei der Charakterisierungslaserstrahl durch Modulation des Bearbeitungslaserstrahls erhalten wird.

**10.** Verfahren nach Anspruch 9, wobei der mindestens eine Impuls des Charakterisierungslaserstrahls für eine Dauer zwischen 10 und 200 Mikrosekunden durch Modulation eines kontinuierlich emittierten Bearbeitungslaserstrahls mit einer Spitzenleistung von 1 kW oder mehr emittiert wird.

**11.** Verfahren nach einem der Ansprüche 1 bis 8, wobei der Charakterisierungslaserstrahl entlang eines mit dem Bearbeitungslaserstrahl gemeinsamen optischen Pfades in einem Bearbeitungskopf einer Maschine zum Implementieren des Laserbearbeitungsverfahrens geführt wird.

**12.** Verfahren nach Anspruch 9 oder 10, umfassend Erkennen des optischen Emissionsspektrums von Metalldampf oder Plasma koaxial zur Ausbreitungsrichtung des Bearbeitungslaserstrahls in einem Bearbeitungskopf einer Maschine zum Implementieren des Laserbearbeitungsverfahrens.

**13.** Verfahren nach Anspruch 9 oder 10, umfassend Erkennen des optischen Emissionsspektrums von Metalldampf oder Plasma unter einem vorbestimmten Winkel zu der Ausbreitungsrichtung des Bearbeitungslaserstrahls in einem Bearbeitungskopf einer Maschine zum Implementieren des Laserbearbeitungsverfahrens, außerhalb des Bearbeitungskopfs.

**14.** Verfahren nach einem der vorhergehenden Ansprüche, umfassend Steuern der Emission von mindestens einem Impuls des Charakterisierungslaserstrahls während der Bearbeitung des Materials.

**15.** Verfahren nach einem der vorhergehenden Ansprüche, wobei Identifizieren einer aus einer Vielzahl von mehreren vorbestimmten Materialklassen oder Klassen von Bearbeitungsparametern, die den spektralen Daten entsprechen, mittels elektronischer Verarbeitungs- und automatischer Erkennungsmittel umfasst:

Umwandeln der spektralen Daten in einen Klassifikationsraum, der durch vorbestimmte orthogonale latente Variablen definiert wird, wobei die latenten Variablen einen Teilsatz signifikanter vorbestimmter latenter Variablen umfassen, die die Varianz der spektralen Daten anzeigen; und

Vergleichen des Werts eines n-Tupels der signifikanten latenten Variablen, die aus den spektralen Daten berechnet werden, mit einem Satz von Referenzwerten des Tupels signifikanter latenter Variablen, die den Satz von Trainingsspektraldatenmuster anzeigen, wodurch die Bearbeitungsparameter des Materials nach den vorbestimmten Bearbeitungsparametern ausgewählt werden, die den Referenzwerten des n-Tupels latenter Variablen zugeordnet sind, die eine vorbestimmte metrische Beziehung mit dem Wert des n-Tupels signifikanter latenter Variablen aufweisen, die aus den gesammelten spektralen Daten berechnet werden.

**16.** Verfahren nach Anspruch 15, wobei die vorbestimmte metrische Beziehung eine Minimalabstandsbeziehung ist.

**17.** Maschine zur Laserbearbeitung eines metallischen Materials, insbesondere zum Laserschneiden, -bohren oder -schweißen eines Volumens des Materials oder zur additiven Fertigung dreidimensionaler Strukturen aus Pulvern des Materials, umfassend

eine Quelle (10) zum Emittieren eines Bearbeitungslaserstrahls (B);
Mittel zum Führen des Bearbeitungslaserstrahls (B), der von der Quelle (10) emittiert wird, entlang eines optischen Pfads zum Transportieren des Strahls (B) zu einem Bearbeitungskopf (14), der sich in der Nähe des Materials (WP) befindet; und
Verarbeitungs- und Steuerungsmittel (40), die eingerichtet sind, die Anwendung des Bearbeitungslaserstrahls (B) entlang einer vorbestimmten Bearbeitungstrajektorie auf das Material (WP) in einer vorbestimmten Prozessatmosphäre und nach aktuellen Bearbeitungsparametern, die auf der Basis des Materials ausgewählt sind, zu steuern,
**dadurch gekennzeichnet, dass** sie ferner umfassen:

eine Quelle (10) zur Emission von mindestens einem Impuls eines Charakterisierungslaserstrahls auf einen vorbestimmte Bereich des Materials in der vorbestimmten Prozessatmosphäre, um Metalldampf und/oder Plasma aus dem Material zu erzeugen;
Mittel (30) zum Erfassen spektraler Daten, die ein optisches Emissionsspektrum von Metalldampf oder Plasma anzeigen, das das Material anzeigt, das in der vorbestimmten Prozessatmosphäre bearbeitet wird; und

elektronische Verarbeitungs- und automatische Erkennungsmittel (42), die in einer überwachenden Lernphase durch einen Satz von Trainingsspektraldatenmustern konfiguriert sind, die vorbestimmte Klassen von Materialien oder vorbestimmte Klassen von Bearbeitungsparametern des Materials anzeigen, und die eingerichtet sind, eine aus einer Vielzahl von vorbestimmten Klassen von Materialien oder vorbestimmten Klassen von Bearbeitungsparametern zu identifizieren, die den erfassten spektralen Daten entsprechen,

wodurch die Verarbeitungs- und Steuerungsmittel (40) eingerichtet sind, die Anwendung des Bearbeitungslaserstrahls (B) nach ausgewählten aktuellen Bearbeitungsparametern abhängig von der identifizierten Materialklasse oder der Klasse von Bearbeitungsparametern zu steuern.

## Revendications

1. Procédé de traitement au laser d'un matériau métallique, en particulier pour la découpe, le perçage ou le soudage au laser d'un volume dudit matériau ou la fabrication additive de structures tridimensionnelles à partir de poudres dudit matériau, comprenant l'irradiation d'un faisceau laser de traitement dans une zone prédéterminée ou le long d'une trajectoire prédéterminée pour le traitement du matériau métallique, dans une atmosphère de traitement prédéterminée et selon des paramètres de traitement actuels sélectionnés sur la base dudit matériau, comprenant une étape consistant à :

contrôler l'émission d'au moins une impulsion d'un faisceau laser de caractérisation sur une région prédéterminée du matériau dans ladite atmosphère de traitement prédéterminée de manière à générer une vapeur métallique et/ou un plasma à partir du matériau ;
et **caractérisé par** les étapes consistant à :

acquérir des données spectrales représentatives d'un spectre d'émission optique de la vapeur métallique ou du plasma indicatif du matériau en cours de traitement dans ladite atmosphère de traitement prédéterminée ;
identifier une des classes prédéterminées de matériau ou des classes prédéterminées de paramètres de traitement correspondant auxdites données spectrales au moyen de moyens de traitement électronique et de reconnaissance automatique configurés lors d'une phase d'apprentissage supervisé à l'aide d'un ensemble d'échantillons de données spectrales d'apprentissage indicatifs de classes prédéterminées de matériaux ou de classes prédéterminées de paramètres de traitement de matériau ; et
sélectionner les paramètres de traitement actuels du matériau en fonction de la classe de matériau ou de la classe de paramètres de traitement identifiée.

2. Le procédé selon la revendication 1, dans lequel lesdits paramètres de traitement prédéterminés comprennent au moins l'une des caractéristiques suivantes : fréquence de répétition des impulsions du faisceau laser de traitement, durée des impulsions du faisceau laser de traitement, puissance des impulsions du faisceau laser de traitement, distribution de la densité de puissance du faisceau laser de traitement, pression du gaz d'assistance.

3. Le procédé selon l'une quelconque des revendications précédentes, comprenant le contrôle de l'émission d'au moins une impulsion du faisceau laser de caractérisation à un stade initial du traitement du matériau, sur une région du matériau destinée à être découpée ou percée.

4. Le procédé selon l'une quelconque des revendications 1 ou 2, comprenant le contrôle de l'émission d'au moins une impulsion du faisceau laser de caractérisation lors d'une étape d'étalonnage préalable au traitement du matériau, sur une zone du matériau non soumise au traitement.

5. Le procédé selon la revendication 3 ou 4, comprenant le contrôle de l'émission d'une pluralité d'impulsions du faisceau laser de caractérisation sur une succession de régions prédéterminées d'une zone de balayage bidimensionnelle du matériau ou sur une succession de régions prédéterminées d'un volume de balayage tridimensionnel du matériau de manière à générer une vapeur métallique ou un plasma respectif à partir du matériau présent dans lesdites régions de balayage.

6. Le procédé selon la revendication 5, dans lequel le contrôle de l'émission d'une pluralité d'impulsions du faisceau laser de caractérisation sur une succession de régions prédéterminées d'un volume de balayage tridimensionnel du matériau comprend la focalisation dudit faisceau laser sur différents plans du matériau, incluant une couche de surface du matériau et au moins une couche sous-jacente, une première impulsion générant une vapeur métallique ou un plasma à partir du matériau de la couche de surface et au moins une seconde impulsion générant une vapeur métallique ou un plasma à partir du matériau de la couche sous-jacente.

7. Le procédé selon l'une quelconque des revendications précédentes, dans lequel des données spectrales représentatives du spectre d'émission optique de la vapeur métallique ou du plasma du matériau sont acquises dans une bande optique comprise entre l'infrarouge proche et l'ultraviolet.

8. Le procédé selon la revendication 7, dans lequel des données spectrales représentatives du spectre d'émission optique de la vapeur métallique ou du plasma du matériau sont acquises à des longueurs d'onde prédéterminées dans la bande optique comprise entre l'infrarouge proche et l'ultraviolet.

9. Le procédé selon l'une quelconque des revendications précédentes, dans lequel ledit faisceau laser de caractérisation est obtenu par modulation du faisceau laser de traitement.

10. Le procédé selon la revendication 9, dans lequel ladite au moins une impulsion du faisceau laser de caractérisation est émise pendant une durée comprise entre 10 et 200 microsecondes par modulation d'un faisceau laser de traitement émis en continu avec une puissance de crête d'au moins 1 kW.

11. Le procédé selon l'une quelconque des revendications 1 à 8, dans lequel ledit faisceau laser de caractérisation est guidé le long d'un chemin optique commun à celui du faisceau laser de traitement dans une tête de traitement d'une machine destinée à mettre en œuvre le procédé de traitement au laser.

12. Le procédé selon la revendication 9 ou 10, comprenant la détection du spectre d'émission optique de la vapeur métallique ou du plasma coaxial à la direction de propagation du faisceau laser de traitement dans une tête de traitement d'une machine destinée à mettre en œuvre le procédé de traitement au laser.

13. Le procédé selon la revendication 9 ou 10, comprenant la détection du spectre d'émission optique de la vapeur métallique ou du plasma au niveau d'un angle prédéterminé par rapport à la direction de propagation du faisceau laser de traitement dans une tête de traitement d'une machine destinée à mettre en œuvre le procédé de traitement au laser, en dehors de la tête de traitement.

14. Le procédé selon l'une quelconque des revendications précédentes, comprenant le contrôle de l'émission d'au moins une impulsion du faisceau laser de caractérisation pendant le traitement du matériau.

15. Le procédé selon l'une quelconque des revendications précédentes, dans lequel l'identification d'une de la pluralité de classes prédéterminées de matériau ou de classes de paramètres de traitement correspondant auxdites données spectrales au moyen de moyens de traitement électronique et de reconnaissance automatique comprend :

la transformation desdites données spectrales en un espace de classification défini par des variables latentes orthogonales prédéterminées, lesdites variables latentes comprenant un sous-ensemble de variables latentes significatives prédéterminées indicatives de la variance desdites données spectrales ; et la comparaison de la valeur d'un n-uplet desdites variables latentes significatives calculée à partir desdites données spectrales avec un ensemble de valeurs de référence dudit n-uplet de variables latentes significatives représentatif dudit ensemble d'échantillons de données spectrales d'apprentissage, ce par quoi les paramètres de traitement du matériau sont sélectionnés en fonction des paramètres de traitement prédéterminés associés aux valeurs de référence dudit n-uplet de variables latentes qui ont une relation métrique prédéterminée avec la valeur dudit n-uplet de variables latentes significatives calculée à partir des données spectrales collectées.

16. Le procédé selon la revendication 15, dans lequel ladite relation métrique prédéterminée est une relation de distance minimale.

17. Machine de traitement au laser d'un matériau métallique, en particulier pour la découpe, le perçage ou le soudage au laser d'un volume dudit matériau ou pour la fabrication additive de structures tridimensionnelles à partir de poudres dudit matériau, comprenant

une source (10) pour émettre un faisceau laser de traitement (B) ; des moyens pour conduire le faisceau laser de traitement (B) émis à partir ladite source (10) le long d'un chemin optique pour transporter le faisceau (B) vers une tête de traitement (14) située à proximité dudit matériau (WP) ; et des moyens de traitement et de contrôle (40) agencés pour contrôler l'application dudit faisceau laser de traitement (B) le long d'une trajectoire de traitement prédéterminée sur le matériau (WP), dans une atmosphère de traitement prédéterminée et selon des paramètres de traitement actuels sélectionnés sur la base dudit matériau,

**caractérisée en ce qu'**elle comprend en outre :

une source (10) d'émission d'au moins une impulsion d'un faisceau laser de caractérisation sur une région prédéterminée du matériau dans ladite atmosphère de traitement prédéterminée, de manière à générer une vapeur métallique et/ou un plasma à partir du matériau ;

des moyens (30) pour acquérir des données spectrales représentatives d'un spectre d'émission optique de vapeur métallique ou de plasma indicatif du matériau en cours de traitement dans ladite atmosphère de traitement prédéterminée ; et

des moyens de traitement électronique et de reconnaissance automatique (42) configurés lors d'une phase d'apprentissage supervisé par un ensemble d'échantillons de données spectrales d'apprentissage indicatifs de classes prédéterminées de matériaux ou de classes prédéterminées de paramètres de traitement de matériau et agencés pour identifier l'une des classes prédéterminées de matériaux ou l'une des classes prédéterminées de paramètres de traitement correspondant auxdites données spectrales acquises,

ce par quoi lesdits moyens de traitement et de contrôle (40) sont agencés pour contrôler l'application dudit faisceau laser de traitement (B) selon des paramètres de traitement actuels sélectionnés en fonction de la classe de matériau ou de la classe de paramètres de traitement identifiée.

**FIG.1**

FIG.2a

DB, 42, 40, 36, 22, 32, 34, B, 24, 26, WP, 20, 12, B, 14, 30, 28, 10, 16, 38

**FIG.2b**

EP 4 561 781 B1

FIG.2c

CHARACTERIZATION LASER BEAM EMISSION — 100

SPECTRAL DATA ACQUISITION — 200

CLASS IDENTIFICATION — 300

PARAMETER SELECTION — 400

PROCESSING LASER CONTROL — 500

FIG.3

**FIG.4a**

**FIG.4b**

**FIG.4c**

**FIG.4d**

**FIG.4e**

**FIG.5**

FIG.6

FIG.7

**FIG.8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3822016 A

**Non-patent literature cited in the description**

- **TAX, D. M.** ; **DUIN, R. P.** Support vector data description. *Machine learning*, 2004, vol. 54 (1), 45-66
- **NING, X.** ; **TSUNG, F.** Improved design of kernel distance-based charts using support vector methods. *IIE transactions*, 2013, vol. 45 (4), 464-476
- **GRASSO M.** ; **COLOSIMO B.M.** ; **SEMERARO Q.** ; **PACELLA M.** A Comparison Study of Distribution-Free Multivariate SPC Methods for Multimode Data. *Quality & Reliability Engineering International*, 2015, vol. 31 (1), 75-96